# EUROPEAN PATENT SPECIFICATION

(11) **EP 0 771 153 B1**
(45) Date of publication and mention of the grant of the patent: **18.08.1999**
(21) Application number: 95924497.1
(22) Date of filing: 11.07.1995
(51) Int. Cl.: A23P 1/00, A23L 3/3454

(54) **COMPOSITION FOR ELIMINATING UNSANITARY RESIDUES FROM FOOD PRODUCTS OF ANIMAL AND VEGETABLE ORIGIN AND METHOD FOR USING THE SAME**
VERFAHREN ZUR ENTFERNUNG VON SCHÄDLICHEN RÜCKSTANDEN AUS NAHRUNGSMITTELN TIERISCHEN- UND PFLANZLICHENURSPRUNGS, UND VERWENDUNG DERSELBEN
COMPOSITION PERMETTANT D'ELIMINER LES RESIDUS INSALUBRES DE PRODUITS ALIMENTAIRES D'ORIGINE ANIMALE ET VEGETALE, ET PROCEDE POUR SA MISE EN OEUVRE

(30) Priority: 14.07.1994 IT MI941479
(43) Date of publication of application: 07.05.1997
(73) Proprietor: Chimica Industriale Dr. Balsano, 20143 Bergamo (IT)
(72) Inventor: BALSANO, Antonio Renato, 24143 Bergamo (IT)
(74) Representative: Cicogna, Franco
(86) International application number: IT9500115
(87) International publication number: WO9602154

(56) References cited:
- FR-A- 2 365 302
- GB-A- 2 009 222
- US-A- 4 395 364

## Description

### FIELD OF THE INVENTION

The present invention relates to a composition useful for processing food products of animal and vegetable origin, in particular fresh bird and pork meats as well as eggs, and fruits and vegetables, for eliminating polluting substances present on their surfaces, while preserving all of their useful and healthiness proprerties. A method for using this composition is moreover disclosed.

### BACKGROUND OF THE INVENTION

As known, fresh food products, both of animal and vegetable origin, are frequently brought to the consume place loaded by unsanitary surface substances so as to provide a great risk for the health of the consumer. These unsanitary substances may consist of polluting agents of organic or inorganic chemical, and microbic nature, deriving from the environement and animal, such as food residues, soil, secretions, defecations and the like.

In particular, the bacterial contaminations, the amount of wich on the surface of live animals (such as swine and chicken) is of the order of several tens millions germs/cm² of skin, is just responsible for the degrading process of the food products. The odor characterizing the altering processes of a lot of food products, such as meats, chicken, or poultry, eggs, fish, etc., is mainly due to products deriving from the bacterial metabolism of the microflora (Pseudomonas, Achromobacter, Corynebacteria, etc.) and not to products of the tissue autolysis.

The presence of microorganisms and unsanitary substances of chemical nature on the skin and generally on the outer layers of the food products, in addition to limiting the commercial duration of the products, also contributes to a contamination of the underlying muscle tissue in the case of meat and of the comestible inner portions in the case of eggs, by preventing the negotiability thereof since bacteriological requirements must be met.

In the case of vegetables, the surface contamination negatively affects the sanitary and microbiological qualities in all of the transformation and preserving steps of the finished products.

The industry in this field has addressed the problem of eliminating these noxious residues and improving the hygienic-sanitary degree related to the processing of several food products, by adopting a number of solutions, the main of which is that solution consists of using disinfectant substances in order to neutralize the bacterial loadings, as disclosed in the US-A-4 140 649 patent.

However, the proposed methods and compositions are practically unsatisfactory. In fact, the unsanitary substances to be removed, particularly in animal origin food products, correspond to several tens of millions of germs/cm² of surface; the problem proper derives, under the hygienic-sanitary aspect and economic aspect, from the impossibility of the above mentioned method of removing tens of millions of germs/cm² of surface, and this lacking of elimination would involve for food products a quick perishability and toxicity. Thus, chlorinated water has been already used (containing 10D20 ppm's of active chlorine): however, these disinfection methods fatally lead to the presence of residues on the final products; in the specific case of the slaughtering of swine, it occurs that an amount larger than 50% of chlorine is restrained on the meat and particularly on the fat tissue, so as to combine with the lipide fractions thereby providing derived products, the dangers of which have not been established.

Moreover, according to the enforcing rules, it is not permitted to use disinfectant, antiseptic and antibacterial substances the residues of which would be susceptible to remain for an indefinite time in food products provided for human feeding, with dangerous consequences for the public health. This problem specifically affects the processing or treatment of bird and pork meats , for which the critical steps in which the most contamination occurs are the scalding bath, the plucking and entrails removing steps.

According to conventional meats cleaning methods, the animal carcass is subjcted to a first washing step, by immersing it for a precisely set time into a hot water bath (the temperature of the bath being of 52-55°C), which also provides the advantage of facilitating the possible subsequent plucking step, in the case of birds, or pile removing step, in the case of swine. At the output of the scalding bath, however, the total microbic loading on the outer surfaces of the carcasses corresponds, in conventional processing methods, to values wich can not meet the sanitary rules or requirements, since said values will increase after the plucking, pile removing and entrails removing steps, thereby causing altering processes to occur on the processed meat, to the detriment of their quality and preserving.

A further problem is represented by the organic and inorganic materials carried by the slaughtered animals which accumulate in the scalding bath and wich can achieve a concentration, in the case of poultry processing, of 8.56% by weight of the bath itself: in this case, the pollution of meat will depend, in addition to a primitive pollution of the carcasses, on the greatly polluted working environment; in fact, the washing water, will tend to become, in the time, a culture broth, mainly if, as it is conventional, one tries to extend the duration to the limit of the eight working hours, by conventional warer-addition operations.

The high temperature of the scalding basin is not sufficient to suppress the bacterial flora built-in therein, and the most advanced slaughtering tecnique is not at present suitable to ovecome this drawback.

In order to improve the processing sanitary conditions, both of scalding water and of the surfaces of the food products, the prior art teaches to add disinfectant substances to the washing water, which is however prohibited in all countries , in order to reduce the bacterial mass. However, it has been found that the hygienic properties of the slaughtered animal obtained by adding to the bath disinfectant substances, not only continue to be technologically insufficient, but, moreover, they are worsened by toxic residues retained on meat up to 60% of the concentration thereof. Under the best hygienic-sanitary conditions and by the most improved technologic systems adopted in the modern industry, at the end of the processing on meat is found a bacterial load of the order of 5·10⁵ germs/cm² of skin if simple washing water is used, whereas a bacterial load of about 1-3·10⁵ germs/cm² of skin is found if to the washing water is added a disinfectant substance, and this in infringement to the CEE's rules. Thus, the bacterial load on the meat surfaces is too much great to assure a proper hygienic-sanitary level. In view of the inefficiency or poor results of the above mentioned methods, the above mentioned unsanitary residues remaining on the meat surfaces are considered as "technologically inevitable" by those skilled in the art.

Accordingly, exists a need of overcoming the above mentioned technical drawback, by providing a method for cleaning the surfaces of the above mentioned food products which does not use food additives susceptible to alter the organoleptic properties , aspect and texture thereof, which does not use active disinfectant, antibacterial agents or other compositions prohibited by the enforcing CEE's rules, which is not toxic, does not alter the food products, and does not leave any residue on the food products itself.

The chemical and bacteriological contamination of the surface of agricultural origin food products is mainly due to the use of fertilizing, pesticide, weed-killer substances, systemic insecticides for plants and animals; these products have revolutionized the agricultural methods, but they leave on the food products residues which make said products incompatible with the human health.

Accordingly, it is necessary to remove the above noxious residues also from the surfaces of vegetable origin food products both as they are provided for a direct consume and as they are provided for industrial transformation and preserving processes.

### SUMMARY OF THE INVENTION

The Applicant has surprisingly found a composition for de-contaminating food products of animal or vegetable origin, suitable to remove from their surfaces germ and unsanitary substance loads, without altering and making noxious the food product texture, said composition comprising sodium sulphate, a suspending agent, carboxymethylcellulose, propylene-glycol, at least a surface active agent, at least a leaching agent, at least a sequestering agent, at least an anti-dehydrating agent, at least a buffering agent and at least an emulsifying agent. This composition is defined in claim 1.

Another object of the present invention is to provide a method for decontaminating surfaces of food products of animal and vegetable origin, comprising the steps of subjecting the food product to a washing by an aqueous solution containing 0.05-1.5% of said composition, at a temperature of 15°C to 65°C, for a time from 60 seconds to 6 minutes, depending on the animal and vegetable e species to be processed, and performing successively a rinsing step by water. This method is defined in claim 8.

As pork and poultry meat has to be specifically processed, said method comprises the steps of subjecting the slaughtered animal to a bath of an aqueous solution containing from 0.1% to 0.3% of said composition during the washing step in the scalding bath and/or subjecting it to a shower spraying by an aqueous solution containing from 0.05% to 0.2% of the aforesaid composition during the subsequent steps of plucking, pile removing and entrails removing, and a subsequent rinsing step in either pure or sea water for removing the hydrosolubilized polluting substances.

As vegetable products are to be decontaminated, the method comprises to use the aforesaid composition in manual and mechanical washing operations of fruit and vegetables provided for the transformation and preserving thereof.

### DETAILED DESCRIPTION OF THE INVENTION

The characteristics and advantages of the composition for eliminating unsanitary residues from surfaces of food products and of the method using said composition according to the present invention will become more apparent from the following detailed disclosure.

The tissue layers which usually coat the animal and vegetable origin food products constitute and ideal environment for the built-in of bacterial loads and noxious residues, since they provide an outer barrier impermeable to washing materials. Hot water per se, even at high temperatures, as used in the prior art, is not sufficient to fully solubilize said impermeable sub-layer, thereon remain a portion of the bacterial load and unsanitary substances. The composition according to the present invention has been designed for removing said unsanitary layers, and this is obtained by processing the food product so as to solubilize the outer surface thereof, thereby rendering it permealable to water and removing by subsequent rinsing operations by pure water said sublayer on which are present the most part of the germs.

The removal of this surface layer of undesired substances, and accordingly of the germs and noxious substances contained herein, is not performed by using antiseptic agents (prohibited by the enforcing rules in this field), but exploiting the capability of some chemical substances of removing the above mentioned layer, and which, in the meanwhile, are inert with respect to the animal tissues, and perfectly harmless since, upon washing, on the surfaces of the food products do not remain any residues.

All of the substances used in the composition according to the invention are used in a pure form, without any noxious impurities. This composition constitutes a "technologic aiding agent", i.e. a substance deliberately used for transforming food products in order to achieve a given technologic objective during the processing or transforming step, as stated by Article 7, item 1, letter c) of the law decree of January 27, 1992, Number 109, based on the 89/395-396/CEE guidelines. This composition does not contain antibacterial active agents, or disinfectant agents or other components the use of which is prohibited by law; it, moreover, provides a good assurance of sanitary qualities and feeding safety of the food products, and in particular of the bird slaughtered meats (fully according to the requirements stated by the 92/116/CEE guideline-encl. B, chapter II, item c)) and of the pork meat (fully according to the requirements stated by the 83/90/CEE guideline-encl.1, chapter VI, comma 31). The composition present invention is not a disinfectant or an additive agent.

The above disclosed composition according to the present invention, constituted by inorganic salts, organic salts and surface active agents, with a full absence of disinfectant and anti-bacterial active agents; has the following features.

| Physical properties | |
|---|---|
| physical status at 20°C | powder |
| color | white |
| odor | odorless |
| pH at 20°C (aqueous solution at 0.15% by weight) | 10.3 |
| water solubility | full |

| Toxicologic properties | |
|---|---|
| acute oral toxicity | it is not considered toxic |
| local effect on the skin | irritating |
| local effect on eyes | irritating |
| first aid measures | wash by water |
| noxious impurities | none |
| danger | none |
| (A not inflammable and not exploding product) | |

The present invention also relates to a method for using the above mentioned composition for purifying surfaces of food product of animal and vegetable origin, comprising the steps of subjecting the food product to a washing by an aqueous solution containing 0.05-1.5% of the above mentioned composition, at a temperature from 15°C to 65°C, for a time from 60 seconds to 6 minutes, and then rinsing by water Preferably, the aforesaid temperature is from 20°C to 55°C in the case of birds, from 20 to 62°C in the case of swine and from 20 to 35°C for processing eggs, and from 15 to 40°C in the case of vegetable products.

In particular, as swine and bird meats are processed, said method can be performed at the most critical points of the processing, in which the greatest contaminations occur, such as the scalding bath processing, the plucking step, the pile removal step and the entrails removing step. In these cases, the method comprises the steps of subjecting the food product to a bath of an aqueous solution containing from 0.1% to 0.3% of the aforesaid composition, during the washing step in the scalding bath, holding the temperature at 50-52°C for chicken, 60-62°C for swine, and/or subjecting the slaughtered bodies to a shower spraying by an aqueous solution containing from 0.05% to 0.2% of the aforesaid composition during the subsequent steps of plucking, pile removing and entrails removing, a subsequent rinsing step by pure water or sea water will allow to definitely remove the hydrosolubilized polluting substances and any undesirable surface residues.

The composition according to the present invention and the method using it are valid in the case of a sanitary improving of meat in general and fish, in addition to washing of egg shells and vegetable products, with good organoleptic and microbiological results (decontamination from Salmonella and E.Coli).

The sanitary advantages of the processing method using the above mentioned composition are also extended, in the growth factor, to all the by-products of bird and swine processings, which are deodorized and sound such as carcasses, chitterlings, bones, feathers, pile and several residues provided for reusing, in the form of commercial meals, in the zootechnical feeding.

The sanitarizing action of the above mentioned composition, as it is used in a washing bath water, can be further improved or enhanced by blowing into said water an ozonized air stream, provided by a suitable ozonizer. The natient oxygen, as it is quickly dissolved in the washing water, will provide a further sanitarizing effect on the surfaces of the food products, thereby improving the surface sanitary quality, and provide a greater alimentary safety and a greater preserving duration of said food products.

Experimentally it has been found that, by blowing in ozone into the water containing the composition of the invention, on the surfaces of the food products do not occur any oxidating reactions susceptible to modify or alter the natural characteristics of the alimentary surfaces, and, moreover, no dangerous residue can be found on said surfaces susceptible to be harmful for the food product healthiness and human health.

By operating under these conditions, moreover, it is possible to sanitize food products which are notoriously known as scarcely sensible to the common processing methods, such those obtained, in particular, from animals breeded under anomalous conditions, specially from a hygienic-sanitary standpoint.

The aforesaid composition and method for using it will allow to provide great santary improvements and, in particular, on meat:
- reduction of the total microbial load (CMT) on the skin, equal to three logarithmic units, which corresponds to a removal of at least 99.99% of the total microbial load and at least 99.94% of Salmonella and E.Coli;
- a greater preserving duration of the slaughtered animal of 50-100% greater than the conventional duration; this period is larger by an amount up to 15 days than the regular duration in the case of bird meat.

The aforesaid composition will modify the chemical-physical properties of the scalding or spraying water with a great efficiency of the chemical and microbial decontamination of the food product surfaces, but it does not negatively affect said food products, and the organoleptic, bromatologic and preservability characteristics thereof will be drastically improved.

The end meat products obtained by the aforesaid processing method will have characteristics of very great alimentary safety, since the components of the inventive composition are not toxic, not dangerous and fully soluble in water;
- the composition does not modify the texture of the cellular tissues of the carcasses;
- the composition does not affect the usual biochemical post-mortem variations of glycogen, lactic acid and ammonia nitrogen which conventionally occur in meats;
- the composition does not leave on the surfaces of the processed animals, after the conventional rinsing operations, any undesirable residues extraneous to the meat;
- the end products are characterized by the absence of any slimy residue since the skin color and hue will be held unchanged without any disagreeable odors and taste.

In the case of pork meats, the above characteristics will allow to obtain both a more even salting and ageing of the cured hams and a more even seasoning of the sausages.

The operating advantages, of great economic incidence, which are particularly achieved in the overall slaughtering process, by adopting the method according to the present invention, both in the presence and in the absence of ozonization, are hereinbelow schematically illustrated;
- an improvement of the production yield;
- a reducing of the scalding bath temperature, held at 50-52°C for birds, and at 60-62°C for swine, thereby obtaining less cooked meat without abrasions;
- the possibility of using the same bath, without any disagreable odors, for the full duration of a continued working cycle of 8 hours;
- a reduction of the amount of water required in the slaughtering process for any kg of meat;
- an improvement of the pile removing and plucking steps, with less abrasions on the skin in the particular case of pork meat or bird meat;
- a quick drying of the animal carcasses, even without using air streams;
- a sanitarizing and deodorizing of the slaughtering by-products (feathers, pile, waste and so on);
- a sanitarizing and deodorizing of the processing equipment, and in general of the working environment;
- an lacking of clogging of the draining channels,
- an improvement of the biodegradability of the waste water.

A further advantage of the present invention relates actually, to the ecological impact of the above mentioned composition, which shows a biodegradability larger than 99%; its presence in waste waters does not negatively affect any purifying process.

Moreover, the concentration of phosphorus which is present in a litre of an aqueous solution of the above mentioned composition at 0.15%, corresponds to 6.20 µg, which is about 1000 times less than the admitted maximum amount.

In order to better illustrate the present invention, without limiting it, there are hereinbelow disclosed the following examples:

### EXAMPLE 1

### Use of the inventive composition in a poultry immersion bath

A practical demonstration of the sanitary efficacy or the composition according to the present invention and method using it, can be deduced by a comparation of the microbiological values which have been found in experiments carried out on poultry or chicken processed exclusively by water and on poultry processed by an aqueous solution of the above mentioned composition at 0.15% in the scalding bath water.

The composition used comprises;

| | |
|---|---|
| Triethanolamine alkylbenzene sulphonate | 1.15% |
| sodium carbonate | 7.10% |
| sodium esamethaphosphate | 6.20% |
| urea | 1.87% |
| maleic acid | 1.79% |
| sodium methasilicate | 67.47% |
| sodium sulphate | 13.15% |
| carboxymethylcellulose | 0.41% |
| propylenglycol | 0.86% |

The adopted slaughtering conditions correspond to the following:

| | |
|---|---|
| - amount of processed carcasses | 20000 |
| - water temperature | 51°C |
| - amount of water in the scalding basin | 6000 1 |
| - amount of the aforesaid composition | 2500 animals/h |
| - use time of the same bath | 1500 l |
| - slaughtering chain speed | 9 kg |
| - water makeDup (up to 12 hours) | 8 h |
| - CMT on the chicken before processing | 6-10⁶ germs/cm² skin |

The drawings have been performed each hour for a time from hours 7 to hours 13 and from hours 14 to hours 16, that is for 8 hours of continuous processing from the starting thereof. The total microbial load (CMT) has been determined by conventional methods; the obtained results are hereinbelow shown in Table 1.

**TABLE 1**

| Total microbial load (CMT) on the surface of the slaughtered carcasses. | | |
|---|---|---|
| TIME (hours) | CMT (germs/cm²) with the composition at 0.15% | CMT (germs/cm²) with water only |
| 7 | 1.1·10³ | 3.9·10⁶ |
| 8 | 1.2·10³ | - |
| 9 | 1.0·10³ | - |
| 10 | 1.4·10³ | 4.8·10⁶ |
| 11 | 1.6·10³ | 5.7·10⁶ |
| 12 | 2.1·10³ | 5.6·10⁶ |
| 13 | 1.·10³ | 6.1·10⁶ |
| 16 | 2.4·10³ | 7.2·10⁶ |

The obtained experimental data show a high efficiency, which previously was considered as impossible to obtain by the word industry, of the removal from the skin of the animals of saprophyte and pathogenous germs in an amount of three logarithmic units.

In the cae of an use of the above mentioned composition in the scalding bath, there is moreover observed an improvement of the plucking step, a reduction of the skin abrasions, an absence of residual slime and a consequent quick drying and, finally, a greater preserving duration at 2-3°C without any altering processes.

At the end of the treatment, the meat has the following organoleptic and inspectorial characteristics:
- - odor:: natural, absence of any fecal odors
- - color:: natural pink
- - taste:: typical of chicken
- - aspect:: perfect
- - texture:: optimum
- - morphological examination:: none evident damage to organs and tissues
- - extraneous chemical residues:: absent

### EXAMPLE 2

### Comparative tests on poultry between the use of the inventive composition and use of chlorine and iodine based disinfectant solutions

These tests have been carried out on Hubbard breed chicken from an industrial breeding farm. In a first series of tests, chicken have been subjected to a spray washing, after entrails removal for 1, 2 and 4 minutes, respectively by a control pure water, a solution containing the inventive composition as disclosed in Example 1, at 0.2%, with an aqueous chlorine solution (200 ppm's) and an aqueous iodine solution (200 ppm's).

In a second series of tests, chicken have been immersed in a hot bath respectively of control pure water, a solution containing the aforesaid imposition at 0.2%, an aqueous chlorine solution (200 ppm's) and an iodine aqueous solution (200 ppm's).

The performed analysis has provided an evaluation of the total bacterial load as well as of the Coliforms and Streptococci D.

The used culture media were triptosium agar for the total count, the Mc Convey's soil for E. Coli and coliforms, and the Escherichia azide agar soil for the Streptococci D.

The chicken taken at the times shown in Table 2 have been subjected to a skin removal operation at their anal region . The skin has been then homogenized in a mixer with 1/4 of a peptone/salt solution. After decimal dilutions, the soils or culture media have been seeded and incubated at 30°C and 37°C for 3 days.

The results of the two aforesaid test series are respectively illustrated in Tables 2 and 3.

**TABLE 2**

| Effects of a spraying washing on poultry by solutions of the aforesaid composition, chlorine and iodine on the total microbe load, on the levels of E. Coli and coliforms and on the levels of streptococci D. | | | | |
|---|---|---|---|---|
| TIME (min.) | treatment by 0.20% solution | treatment by a chlorine solution (200 ppm's) | treatment by an iodine solution (200 ppm's) | pure water control |
| | | | | |

| TOTAL BATERlAL LOAD (germs/cm²) | | | | |
|---|---|---|---|---|
| 1 | 10⁵ | 10⁶ | 10⁶ | 10⁶ |
| 2 | 10⁴ | 10⁵ | 10⁶ | --- |
| 4 | 10³ | 10⁴ | 10⁶ | 10⁶ |

| E. COLI AND COLIFORMS (germs/cm²) | | | | |
|---|---|---|---|---|
| 1 | 10³ | 10⁴ | 104 | 10⁵ |
| 2 | 10³ | 10⁴ | 10⁴ | --- |
| 4 | 10² | 10² | 10³ | 10⁵ |

| STREPTOCOCCI D (germs/cm²) | | | | |
|---|---|---|---|---|
| 1 | 10⁴ | 10⁵ | 10⁴ | 10⁵ |
| 2 | 10³ | 10⁵ | 10⁴ | --- |
| 4 | 10² | 10³ | 10⁴ | 10⁵ |

**TABLE 3**

| Effects of washing by immersing chicken into solution of the aforesaid composition, chlorine and iodine on the total microbe or bacterial load, on the levels of E. Coli and coliforms and on the levels of streptococci D. | | | | |
|---|---|---|---|---|
| TIME (min.) | treatment by 0.20% solution | treatment by a chlorine solution (200 ppm's) | treatment by an iodine solution (200 ppm's) | pure water control |
| | | | | |

| TOTAL BATERIAL LOAD (germs/cm²) | | | | |
|---|---|---|---|---|
| 2 | 10⁴ | 10⁴ | 10⁵ | 10⁶ |
| 4 | 10⁴ | 10⁴ | 10⁵ | 10⁶ |

| E. COLI AND COLIFORMS (germs/cm²) | | | | |
|---|---|---|---|---|
| 2 | 10² | 10² | 10⁴ | 10⁴ |
| 4 | 10² | 10² | 10⁴ | 10⁴ |

| STREPTOCOCCI D (germs/cm²) | | | | |
|---|---|---|---|---|
| 2 | 10² | 10² | 10⁴ | 10⁴ |
| 4 | 10² | 10² | 10⁴ | 10⁴ |

The above data show a reduction of the total bacterial or microbe load corrisponding to three logarithmic units, as well as a nearly complete elimination of E. Coli and Streptococci D.

The organoleptic characteristics of the treatment product including the composition according to the present invention are irreproachable, whereas they are abnormal and with an intensive chlorine and iodine odor in the other two cases.

Finally, the treatment by the aforesaid composition provides very good sanitary characteristics which are very safe from a toxicity standpoint, whereas the chlorine and iodine solutions leave present toxic residues in an amount from 50 to 100% of the used concentration, so that they are not suitable for a food consume.

The duration of the chicken preserving period is increased by 13 days using the aforesaid composition, with respect to 8 and 6 days respectively obtained by a treatment using the chlorine and iodine containing solution.

### EXAMPLE 3

### Comparative tests on swine, between the use of the inventive composition and the use of chlorine and iodine based disinfectant solutions.

The two test series performed on chicken, according to the Example 2, have been likewise repeated on swine; the obtained results have been shown in the following Tables 4 and 5.

**TABLE 4**

| Effects of a spray washing on swine, using solutions of the aforesaid composition, chlorine and iodine on the total bacterial load, and on the levels of E. Coli and coliforms and streptococci D. | | | | |
|---|---|---|---|---|
| TIME (min.) | treatment by 0.20% solution | treatment by a chlorine solution (200 ppm's) | treatment by an iodine solution (200 ppm's) | pure water control |
| | | | | |

| TOTAL BATERIAL LOAD (germs/cm²) | | | | |
|---|---|---|---|---|
| 1 | 10⁶ | 10⁶ | 10⁵ | 106 |
| 2 | 10⁵ | 10⁵ | 10⁵ | --- |
| 4 | 10⁴ | 10⁵ | 10⁵ | --- |

| E. COLI AND COLIFORMS (germs/cm²) | | | | |
|---|---|---|---|---|
| 1 | 10³ | 10³ | 10³ | 10⁴ |
| 2 | 10² | 10² | 10³ | --- |
| 4 | 10 | 10 | 10³ | 104 |

| STREPTOCOCCI D (germs/cm²) | | | | |
|---|---|---|---|---|
| 1 | 10³ | 10³ | 10³ | 10⁴ |
| 2 | 10² | 10² | 10³ | --- |
| 4 | 10 | 10² | 10³ | 10⁴ |

**TABLE 5**

| Effects of washing by immersing swine into solutions of the aforesaid composition, chlorine and iodine on the total bacterial load, and on the levels of E. Coli and coliforms and on levels of streptococci D. | | | | |
|---|---|---|---|---|
| TIME (min.) | treatment by a 0.20% solution | treatment by a chlorine solution (200 ppm's) | treatment by an iodine solution (200 ppm's) | pure water control |
| | | | | |

| TOTAL BATERIAL LOAD (germs/cm²) | | | | |
|---|---|---|---|---|
| 1 | 10⁵ | 10⁶ | 10⁶ | 10⁶ |
| 2 | 10⁴ | 10⁵ | 10⁶ | --- |
| 4 | 10³ | 10⁴ | 10⁶ | 10⁶ |

| E. COLI AND COLIFORMS (germs/cm²) | | | | |
|---|---|---|---|---|
| 1 | 10⁵ | 10⁵ | 10³ | 10⁶ |
| 2 | 10⁴ | 10⁴ | 10³ | --- |
| 4 | 10³ | 10 | 102 | 10⁶ |

| STREPTOCOCCI D (germs/cm²) | | | | |
|---|---|---|---|---|
| 1 | 10³ | 10³ | 10³ | 10⁴ |
| 2 | 10² | 10² | 10³ | --- |
| 4 | 10 | 10² | 10² | 10⁴ |

Even in this case, the composition according to the present invention provides a significant reduction, with respect to the controls, of the surface bacterial load present on the skin of the slaughtered swine. The aforesaid composition administered by spraying an aqueous solution, or as a direct bath, has demonstrated an efficiency which can be compared with that of the chlorine solution having a concentration of 200 ppm's, however without toxicity and incompatibility in the treatment of food products characterizing the latter.

### EXAMPLE 4

### Effects of the inventive composition on the microbic flora contaminating the hen egg shells.

The tests have been carried out on four samples of 24 eggs each (12 of which being control samples), the shells of which have been soiled under different conditions:

### SAMPLE 1

Poultry excrements have been diluted by a physiological solution and homogenized in a mortar so as to provide a homogeneous suspension. The thus obtained material has been used for soiling, by a cotton pad, the shells of conventionally commercially available eggs. After soiling, the eggs have been left at room temperature of 24 hours, in order to allow the material to dry on the surfaces of the shells.

### SAMPLE 2

The egg shell has been soiled, instead of using diluted poultry excrements, by blended cultures of microorganisms obtained from eggs taken from an egg-hen breeding farm; the following operations have been carried out as disclosed for Simple 1.

### SAMPLE 3

The egg shell has been soiled by using pure cultures, mutually blended, of E. Coli and S. typhimurium. Even in this case, the following operations have been carried out as therein above disclosed .

### SAMPLE 4

Commercially available eggs have been used the shells of which were not soiled in any manners.

For washing the shells, aqueous solutions containing the composition of the invention as disclosed in Example 1 and having the following concentrations have been used: for Samples 1 and 2: 0.2, 0.4, 0.6, 0.8, 1.0 and 1.2%; for Samples 3 and 4

### Shell washing method

Upon processing as above disclosed, all the eggs were immersed for two minutes into one of the above disclosed solution, or in a physiologic solution (a control set) held at room temperature; then they were accurately washed by using bristle brushes. Upon holding the eggs at room temperature for an hour so as to allow their shells to dry, they were washed again by a peptonized physiologic solution (20 ml for egg) by using again sterilized brushes. The thus obtained washing liquid was diluted according to 10-base logarithmic units up to 10⁻⁶, and the several dilutions were been used for seeding the different culture media.

### Bacteriological tests

All of the bacteriological analyses were performed by using DIFCO R soils or media and, more specifically:
- for determining the total bacterial load a Bacto plate count agar was used;
- for the colimetry and counting E. Coli Bacto violet red bile agar was used;
- for counting Salmonellae a Bacto brilliant green agar was used.

The used procedures are conventionally known ones.

The results of the bacteriological tests have been collected in the following Table 6.

**TABLE 6**

| Bacteriological tests on eggs of Samples 1-4 | | | | |
|---|---|---|---|---|
| WASHING SOLUTION CONCENTRATION | UFC*/EGG TOTAL BACTERIAL LOAD | UFC/EGG COLIMEASUREMENT | E.COLI/EGG | S.TYPHIMURIUM/EGG |
| | | | | |

| SAMPLE 1 | | | | |
|---|---|---|---|---|
| Control Set | 8.0·10⁵ | 3.0·10⁴ | ― | ― |
| 0.2% | 4.8·20⁵ | 2.5·10⁴ | ― | ¤¤ |
| 0.4% | 2.0·10⁵ | 9.0·10³ | ― | ¤¤ |
| 0.6% | 3.2·10⁴ | 3.0·10³ | ― | ¤¤ |
| 0.8% | 8.8·10³ | 4.4·10² | ― | ¤¤ |
| 1.0% | 7.7·10² | 9.0·10¹ | ― | ¤¤ |
| 1.2% | 6.0·10² | 7.3·10¹ | ― | ¤¤ |

| SAMPLE 2 | | | | |
|---|---|---|---|---|
| Control Set | 1.7·10⁷ | ― | ¤¤ | ― |
| 0.2% | 9.0·10⁶ | ― | ¤¤ | ― |
| 0.4% | 3.2·10⁶ | ― | ¤¤ | ― |
| 0.6% | 6.4·10⁵ | ― | ¤¤ | - |
| 0.8% | 2,8·10⁵ | ― | ¤¤ | ― |
| 1.0% | 7.6·10⁴ | ― | ¤¤ | ― |
| 1.2% | 6.4·10⁴ | ― | ¤¤ | ― |

| SEMPLE 3 | | | | |
|---|---|---|---|---|
| Control Set | ― | ¤¤ | 6.1·10⁵ | 3,9·10⁴ |
| 1,0% | ― | ¤¤ | 8.4·10² | 1,2·10¹ |

| SAMPLE 4 | | | | |
|---|---|---|---|---|
| Control Set | 7.6·10³ | ― | ¤¤ | ― |
| 1.0% | 3.2·10⁰ | ― | ¤¤ | - |

| | | | | |
|---|---|---|---|---|
| *By UFC there are meant colony forming units. | | | | |

Each value of the above Table represents the numeric average of 10 analyses each performed on 12 eggs.

The several solutions of the product being tested facilitate the egg washing operations, with results which are directly proportional to the concentration of the used composition; this advantage could be enhanced by performing the washing operation at a temperature of 37-40°C, as conventionally used for washing eggs (the latter mentioned tests were carried out at room temperature).

The above mentioned composition, moreover, is suitable to greatly improve the aesthetical aspect of the shell, since it makes the shell brighter and whiter; this effect is maximum as the concentration of the used solution is 0.6%.

The microbiological effects are directly proportional to the concentration of the solution used for washing the shells; the effect is nearly zero or negligible up to a value of 0.6% of the solution concentration, but it is particularly evident at a concentration of 1%, for which the reduction of the number values of the microorganisms is of three logarithmic units. The subject composition has been found to be particularly efficient for de-contaminating shells from Salmonella.

In this connection it should be pointed out that usually the soilings of the shells are much smaller than those artificially made in order to stress the advantages of the composition according to the present invention.

### EXAMPLE 5

### Persistence of the inventive composition on the skin of poultry

The persistence of the components of the inventive composition, as disclosed in Example 1, on skin of poultry processed by a solution at 0.15% of the same has been evaluated after the poultry stunning and bleeding steps, and before the plucking step.

50 animals having an average weight of 1.800 kg have been used: a first set of 25 animals have been subjected to conventional slaughtering and carcass preparing procedures (immersion into water warmed to 55°C, feather removing, washing and entrails removing steps) by adding to the water bath into which the animals were immersed, before removing feathers, an amount of the above mentioned composition suitable to provide a concentration of 0.15%.

A second set of 25 animals were subjected to the same experimental procedure by adding to the warm water bath an amount of the above mentioned composition suitable to provide a concentration of 0.075%.

The animals were divided into 5 sets (each of 5 animals) of which 1 set (a control set) was immersed into worm water not containing the inventive composition, whereas the other 4 sets here immersed into the above disclosed solutions.

For all the sets, the immersion period was of 20 seconds.

Of the 4 sets processed by the solution being tested at the two mentioned different concentrations, a set (SET A) after the feather removing step was not subjected to any further washing process; a second set (SET B) was successively washed by 350 ml of water percolated onto the animal; a third set (SET C) was washed by 700 ml of water for animal; finally, a fourth set (SET D) was washed by 1050 ml of water for animal.

From all the animals were taken, at the end of the preparing step, 25 g of skin, which were finely homogenized by Ultraturax R, by adding to each sample 125 ml of bidistilled water. The homogenized material was subjected to a double filtering operation on an absorbing paper and the filtered liquid was used for analysis.

By using known methods, the biologic meaning residues, in particular sodium methasilicate and sodium alkylarylsulphonate were determined.

### Persistence of SiO₂ residues on the poultry skin

The results related to this test have been shown in the following Table 7.

**TABLE 7**

| SiO₂ residues on the poultry skin | | | |
|---|---|---|---|
| Set | No. of animals | SiO₂ found (*) ppm/skin | SiO₂ calculated (**) ppm/animal |
| | | | |

| CONCENTRATION OF 0, 15% | | | |
|---|---|---|---|
| Controls | 5 | 0 | 0 |
| A animals not washed | 5 | 46,7 | 1,86 |
| B animals washed by 350 ml/animal | 5 | 34,3 | 1,37 |
| C animals washed by 700 ml/animal | 5 | 36,5 | 1,46 |
| D animals washed by 1050 ml/animal | 5 | 35,2 | 1,40 |

| CONCENTRATION OF 0, 15% | | | |
|---|---|---|---|
| Controls | 5 | 0 | 0 |
| A animals not washed | 5 | 23,7 | 0,92 |
| B animals washed by 350 ml/animal | 5 | 16,3 | 0,65 |
| C animals washed by 700 ml/animal | 5 | 17,2 | 0,69 |
| D animals washed by 1050 ml/animal | 5 | 15,9 | 0,63 |

| | | | |
|---|---|---|---|
| (*) µg SiO₂ / g skin | | | |
| (**) Since the skin constitutes about 4 % of the animal body weight, the concentration of SiO₂ has been referred to the total carcass (µg/g animal) | | | |

The silicon bioxide, in the amounts included in the animal carcass as shown by these analyses does not cause any toxic effect.

### Persistence of sodium alkylarylsulphonate residues on the poultry skins

The results related to this test have been shown in the following Table 8.

**TABLE 8**

| Residues of sodium alkylarylsulphonate (ABS) on the poultry skins | | | |
|---|---|---|---|
| Set | No. of animals | SiO2 found (*) ppm/skin | SiO₂ calculated (**) ppm/animal |
| | | | |

| CONCENTRATION OF 0, 15% | | | |
|---|---|---|---|
| Controls | 5 | 0 | 0 |
| A animals not washed | 5 | 1.9 | 0,076 |
| B animals washed by 350 ml/animal | 5 | 1.0 | 0,040 |
| C animals washed by 700 ml/animal | 5 | 0.4 | 0,016 |
| D animals washed by 1050 ml/animal | 5 | 0 | 0 |

| CONCENTRATION OF 0, 15% | | | |
|---|---|---|---|
| Controls | 5 | 0 | 0 |
| A animals not washed | 5 | 0.9 | 0.036 |
| B animals washed by 350 ml/animal | 5 | 0.5 | 0.020 |
| C animals washed by 700 ml/animal | 5 | 0.20 | 0.008 |
| D animals washed by 1050 ml/animal | 5 | 0 | 0 |

| | | | |
|---|---|---|---|
| (*) µg SiO₂ / g skin | | | |
| (**) Since the skin constitutes about 4 % of the animal body weight, the sodium alkylbenzene sulphonate concentration has been referred to the total carcass (µg/g animal) | | | |

As shown by the above results, no alkylaryl sulphonate residue is found on the poultry skin after washing the animals (sensibility of the analysis method: 0.1 ppm). Even by admitting residues of ABS on the poultry skin less than 0. 1 ppm, the toxic effects of this substance, at such a dose, are practically zero. In this connection, the CEE Rule of the Counsel of September 18, 1979 , bearing the 6th modification of the CEE Rule 67D548 of the GEE Official Gazette L259 of October 15,1979, considers ABS has not noxiuous, since the DL₅₀, as determined orally and cutaneously in rat and rabbit is greater than 2000 mg/kg.

In view of the good results obtained on the surfaces of Lood products of animal origin, the composition according to the present invention has been also tested on vegetable food products, in particular on vegetables and fruit.

Since it is practically impossible to test the effect of the subject composition on all the noxious substances used in agriculture, the tests have been limited to the removal of residues pertaining to the fertilizer class both of chemical and biological nature

For the test were used 6 sets (including 3 control sets) of the following vegetable products, representative of vegetables: carrots, tomatoes, peppers, fennels and of the following fruit: apples, pears, peaches, apricots.

For simulating the fertilization processing of the products, No. 2 samples were then prepared:

### SAMPLE No. 1

To a physiological solution were added 5 g/each of the following phosphate fertilizers (sodium persphosphate), nitric fertilizers (ammonium sulphate) and potassium fertilizers (potassium carbonate) so as to provide a homogeneous solution. Into this bath was immersed for few seconds the first set including vegetables and fruit; then it was allowed to dry for 24 hours in order to allow the material to dry on the surfaces.

### SAMPLE No.2

Into a second physiological solution poultry excrements have been homogenized so as to provide a homogeneous slurry. After having divided this slurry into two portions, into one was immersed for few seconds the 2nd set including vegetables; into the 2nd slurry portion was immersed, for few seconds, the 3rd set comprising fruit. Both these sets were left to dry for 24 hours. at room temperature.

The same processing method for Samples 1 and 2 was applied to the three control sets.

After 24 hours from the artificial soiling operations on the food products, the samples of lst, 2nd and 3rd sets were subjected to a leaching operation for three minutes in a solution holding 1% of the inventive composition, at room temperature.

Then, all the three sets were abundantly rinsed and left to rest for an hour. Then, all the three sets were been washed by a physiological solution (50ml/50g vegetable) and the obtained liquids were respectively subjected to analysis; the 1st set to a chemical analysis in order to show the chemical fertilizer residues (phosphate, nitrate and potassium residues), which, being all soluble in the rinsing water provided a zero result, thereby confirming a decontamination of 100%. The washing liquids obtained from the 2nd and 3rd set contaminated by excrements, were subjected to an analysis by known bacteriological methods in order to find the total bacterial or microbial load. That same treatment, with the exclusion of the leaching step by the inventive solution, was performed on the control sets.

The related results are shown in the following Tables 9 and 10.

**TABLE 9**

| Residues of phosphorus, nitrogen and potassium fertilizer after a processing by an inventive solution at 1% | | |
|---|---|---|
| Set No.1 | Number | Residues found ppm/g skin |
| control | 4 | 40 |
| vegetables | 4 | 0 |
| fruit | 4 | 0 |

**TABLE 10**

| Bacteriological tests on the vegetables and fruit of sets 2 and 3 | |
|---|---|
| Concentration of the washing solution: 1% | UFC/piece |
| | total microbial load |
| Control set No. 2 | 8.0 - 10⁴ |
| carrots | 5.1 -10 |
| tomato | 2.4 - 10 |
| pepper | 3.0 - 10 |
| fennels | 4.2 - 10 |
| Control set No. 3 | 8.0 - 10⁴ |
| apples | 3.4 - 10 |
| pears | 2.4 - 10 |
| peaches | 4.1 - 10 |
| apricots | 3.6 - 10 |

It was possible to perform these tests since the vegetable and fruit samples were provided with firm outer fibre surfaces; thereby the obtained results can be considered as meaningful and interesting for all the improving operations on the hygienic and microbiological quality of vegetable origin food products too, both provided for a direct consume and provided for industrial transforming and preserving processes.

## Claims

1. A composition useful for eliminating unsanitary chemical and microbiological residues from the surfaces of food products of animal and vegetable origin, comprising sodium sulfate in an amount from 10 to 25% by weight; carboxymethylcellulose in an mount from 0.4 to 6%; propylenglycol; at least a surface active agent selected from the class of trietranolamine alkyl-benzene sulphonates; at least a bleaching agent; at least a sequestering agent selected from sodium esamethaphosphate, sodium tripolyphosphate and trisodium edetate, in an amount from 4 to 8%; at least an antidehydrating agent selected from urea and sodium chloride, in an amount from 1 to 7.5%; at least a buffering agent selected from sorbic acid, cidric acid, and malic acid, in an amount from 0.5 to 2%; at least an emulsifying agent selected from sodium methasilicate and sodium orthophosphate in an amount from 30 to 70%, characterized in that said propylenglycol is present in an amount of 1% by weight, said surface active agent is triethanolamine alkyl-benzene-sulphonate having either a straight or a branched alkyl chain comprising from 4 to 8 carbon atoms, and being present in an amount of 2% by weight, and said bleaching agent is sodium carbonate and being present in an amount of 8% by weight.

2. A composition according to Claim 1, characterized in that said sodium sulphate is present in an amount of 14% by weight.

3. A composition according to Claim 1, characterized in that said carboxymethylcellulose is present in an amount of 1% by weight.

4. A composition according to Claim 1, characterized in that said sequestering agent is sodium esamethaphosphate, and being present in an amount of 6% by weight.

5. A composition according to Claim 1, characterized in that said anti-dehydrating agent is urea, and being present in an amount of 2% by weight.

6. A composition according to Claim 1, characterized in that said buffering agent is malic acid, and being present in an amount of 1% by weight.

7. A composition according to Claim 1, characterized in that said emulsifying agent is sodium methasilicate, and being present in an amount of 65% by weight.

8. A method for eliminating unsanitary chemical and microbiological residues, from surfaces of food product of animal and vegetable origin, comprising the steps of subjecting said food product to a washing by an aqueous solution containing 0.05-1.5% by weight of the composition according to one of claims 1-7.

9. A method according to Claim 8, characterized in that said food products comprise bird and swine meat, and that said method is carried out during the process steps of the scalding bath and/or plucking, pile removing and entrails removing of the slaughtered animals.

10. A method according to Claims 8 and 9, characterized in that during said scalding step the food product is immersed into an aqueous solution containing from 0.1 to 0.3% of said composition.

11. A method according to Claims 8 and 9, characterized in that during said plucking or pile removal steps and/or after said entrails removing step, said food product is washed by an aqueous solution containing from 0.05 to 0.2% of said composition.

12. A method according to Claims 8 and 9, characterized in that, during said scalding bath step, an ionized air stream is blown into the washing bath water.

13. A method according to Claim 9, characterized in that said food products comprise eggs and vegetable products such as fruits and vegetables, and that said method is carried out at a temperature from 20°C to 35°C.

14. A method according to Claim 8 for eliminating unsanitary residues of chemical and microbiological nature from surfaces of food products of vegetable origin, in particular vegetables and fruit, characterized in that said method comprises the step of subjecting said food product to a washing by an aqueous solution containing from 0.10 to 3% of said composition, according to one or more of Claims 1 to 7, at a temperature from 15°C to 40°C for a set time depending on the vegetable species of the food product and on the manual or automatic washing type.

## Patentansprüche

1. Ein Gemisch zur Beseitigung ungesunder chemischer und mikrobiologischer Rückstände von den Oberflächen von Nahrungsmittelprodukten tierischen oder pflanzlichen Ursprungs, das von 10 bis 25 Gewichtsprozent Natriumsulfat beinhaltet; von 0.4 bis 6% Carboxymethylzellulose; Propylenglykol; wenigstens ein oberflächenaktives Reagens von der Klasse der Triethanolamin-Alkylbenzolsulfonate; wenigstens ein Bleichmittel; wenigstens einen Komplexbildner, ausgewählt aus Natriumhexametaphosphat, Natriumtripolyphosphat und Trinatriumedetat, in einer Menge von 4 bis 8%; wenigstens ein anti-dehydratisierendes Reagens, ausgewählt aus Harnstoff und Natriumchlorid, in einer Menge von 1 bis 7.5%; wenigstens ein Pufferreagens, ausgewählt aus Sorbinsäure, Zitronensäure und Äpfelsäure in einer Menge von 0.5 bis 2%; wenigstens ein emulsionsbildendes Reagens, ausgewählt aus Natriummetasilikat und Natriumorthophosphat in einer Menge von 30 bis 70%, dadurch gekennzeichnet, daß dieses Propylenglykol in einer Menge von einem Gewichtsprozent vorhanden ist, dieses oberflächenaktive Reagens Triethanolamin-Alkylbenzolsulfonat mit einer geraden oder verzweigten Alkylkette ist, die 4 bis 8 Kohlenstoffatome umfaßt, und in einer Menge von 2 Gewichtsprozent vorhanden ist, und daß dieses Bleichmittel Natriumcarbonat ist und in einer Menge von 8 Gewichtsprozent vorhanden ist.

2. Ein Gemisch nach Anspruch 1, dadurch gekennzeichnet, daß dieses Natriumsulfat in einer Menge von 14 Gewichtsprozent vorhanden ist.

3. Ein Gemisch nach Anspruch 1, dadurch gekennzeichnet, daß diese Carboxymethylzellulose in einer Menge von 14 Gewichtsprozent vorhanden ist.

4. Ein Gemisch nach Anspruch 1, dadurch gekennzeichnet, daß dieser Komplexbildner Natriumhexametaphosphat ist und in einer Menge von 6 Gewichtsprozent vorhanden ist.

5. Ein Gemisch nach Anspruch 1, dadurch gekennzeichnet, daß dieses anti-dehydratisierende Reagens Harnstoff ist und in einer Menge von 2 Gewichtsprozent vorhanden ist.

6. Ein Gemisch nach Anspruch 1, dadurch gekennzeichnet, daß dieses Pufferreagens Äpfelsäure ist und in einer Menge von einem Gewichtsprozent vorhanden ist.

7. Ein Gemisch nach Anspruch 1, dadurch gekennzeichnet, daß dieses emulsionsbildende Reagens Natriummetasilikat ist und in einer Menge von 65 Gewichtsprozent vorhanden ist.

8. Ein Verfahren zur Beseitigung ungesunder chemischer und mikrobiologischer Rückstände von den Oberflächen von Nahrungsmittelprodukten tierischen oder pflanzlichen Ursprungs, das den Schritt des Aussetzens dieses Nahrungsmittelprodukts einem Waschvorgang in einer wäßrigen Lösung einschließt, die 0.05 bis 1.5 Gewichtsprozent des Gemischs nach einem der Ansprüche 1 bis 7 enthält.

9. Ein Verfahren nach Anspruch 8, dadurch gekennzeichnet, daß diese Nahrungsmittelprodukte Geflügel- und Schweinefleisch umfassen, und daß dieses Verfahren während der Verfahrensschritte des Brühbades und/oder des Rupfens, des Enthaarens und des Ausnehmens der geschlachteten Tiere durchgeführt wird.

10. Ein Verfahren nach den Ansprüchen 8 und 9, dadurch gekennzeichnet, daß während diesem Brühschritt das Nahrungsmittelprodukt in eine wäßrige Lösung getaucht wird, die von 0.1 bis 0.3% dieses Gemischs enthält.

11. Ein Verfahren nach den Ansprüchen 8 und 9, dadurch gekennzeichnet, daß während dieser Schritte des Rupfens oder des Enthaarens und/oder nach diesem Schritt des Ausnehmens dieses Nahrungsmittelprodukt in einer wäßrigen Lösung gewaschen wird, die 0.05 bis 0.2% dieses Gemischs enthält.

12. Ein Verfahren nach den Ansprüchen 8 und 9, dadurch gekennzeichnet, daß während diesem Schritt des Brühbades ein ionisierter Luftstrahl in das Brühwasser geblasen wird.

13. Ein Verfahren nach Anspruch 9, dadurch gekennzeichnet, daß diese Nahrungsmittelprodukte Eier und vegetarische Produkte, wie z. B. Früchte und Gemüse, umfassen, und daß dieses Verfahren bei Temperaturen zwischen 20 und 35°C durchgeführt wird.

14. Ein Verfahren nach Anspruch 8 zur Beseitigung ungesunder Rückstände chemischer und mikrobiologischer Art von den Oberflächen von Nahrungsmittelprodukten vegetarischen Ursprungs, insbesondere von Gemüse und Früchten, dadurch gekennzeichnet, daß dieses Verfahren den Schritt des Aussetzens dieses Nahrungsmittelprodukts einem Waschvorgang in einer wäßrigen Lösung umfaßt, die von 0.1 bis 3% dieses Gemischs nach einem oder mehreren der Ansprüche 1 bis 7 enthält, und bei einer Temperatur zwischen 15°C und 40°C für eine bestimmte Zeit, die von der Gemüseart und der Art des Waschvorgangs, also manuell oder automatisiert, abhängt.

## Revendications

1. Composition permettant d'éliminer des résidus chimiques et microbiologiques insalubres des surfaces de produits alimentaires d'origine animalière et végétale, comprenant du sulfate de sodium dans une quantité de 10 à 25% en poids; de la cellulose carboxyméthylique dans une quantité de 0,4 à 6%; du propylène glycol; au moins un agent tensio-actif choisi parmi la classe de triethanolamine alkhyl-benzène sulfonates; au moins un agent de blanchiment; au moins un complexant choisi parmi l'esamethaphosphate de sodium, le tripolyphosphate de sodium et l'édedate trisodique, dans une quantité de 4 à 8%; au moins un anti-déshydratant choisi parmi l'urée et le chlorure de sodium, dans une quantité de 1 à 7,5 %; au moins un agent tampon choisi parmi l'acide sorbique, l'acide citrique ou l'acide malique, dans une quantité de 0,5 à 2%; au moins un émulsifiant choisi parmi le méthasilicate de sodium et l'orthophosphate de sodium dans une quantité de 30 à 70%, caractérisée en ce que ledit propylène glycol est présent dans une quantité de 1% en poids, en ce que ledit agent tensio-actif est du triethanolamine alkyle-benzène sulfonate ayant une chaîne alkyle linéaire ou ramifiée comprenant entre 4 et 8 atomes de carbone, et qui est présent dans une quantité de 2% en poids et en ce que le dit agent de blanchiment est du carbonate de sodium présent dans une quantité de 8% en poids.

2. Composition selon la revendication 1, caractérisée en ce que ledit sulfate de sodium est présent dans une quantité de 14% en poids.

3. Composition selon la revendication 1, caractérisée en ce que ladite cellulose carboxyméthylique est présente dans une quantité de 14% en poids.

4. Composition selon la revendication 1, caractérisée en ce que ledit complexant est de l'esamethaphosphate de sodium et présent dans une quantité de 6% en poids.

5. Composition selon la revendication 1, caractérisée en ce que ledit anti-déshydratant est de l'urée et présent dans une quantité de 2% en poids.

6. Composition selon la revendication 1, caractérisée en ce que ledit agent tampon est de l'acide malique et présent dans une quantité de 1% en poids.

7. Composition selon la revendication 1, caractérisée en ce que ledit émulsifiant est du méthasilicate de sodium et présent dans une quantité de 65% en poids.

8. Procédé pour éliminer des résidus chimiques et microbiologiques insalubres des surfaces de produits alimentaires d'origine animalière et végétale, comprenant les étapes pour soumettre lesdits produits alimentaires à un lavage par une solution aqueuse contenant 0,05-1,5% en poids de la composition selon l'une des revendications 1-7.

9. Procédé selon la revendication 8, caractérisé en ce que lesdits produits alimentaires contiennent de la viande d'oiseau et de porc, et en ce que ledit procédé est réalisé pendant les étapes de l'échaudage et/ou le plumage, le retrait des poils d'animaux abattus ou de leurs entrailles.

10. Procédé selon les revendications 8 et 9, caractérisé en ce que lors de ladite étape d'échaudage, le produit alimentaire est immergé dans une solution aqueuse contenant entre 0,1 et 0,3% de ladite composition.

11. Procédé selon les revendications 8 et 9, caractérisé en ce que lors desdites étapes de plumage ou d'enlèvement des poils d'animaux abattus et/ou après la dite étape de retrait de leurs entrailles, ledit produit alimentaire est lavé par une solution aqueuse contenant entre 0,05 et 0,2% de ladite composition.

12. Procédé selon les revendications 8 et 9, caractérisé en ce que lors de ladite étape d'échaudage, un jet d'air ionisé est soufflé dans l'eau de l'échaudoir.

13. Procédé selon la revendication 9, caractérisé en ce que lesdits produits alimentaires comprennent des oeufs et des produits végétaux tels que des dits et des légumes, et en ce que ledit procédé est réalisé à une température entre 20°C et 35°C.

14. Procédé selon la revendication 8 pour éliminer des résidus chimiques et microbiologiques insalubres des surfaces de produits alimentaires d'origine animalière et végétale, en particulier des légumes et des fruits, caractérisé en ce que ledit procédé comporte l'étape lors de laquelle ledit produit alimentaire est soumis à un lavage par une solution aqueuse contenant entre 0,10 et 3% de ladite composition, selon une ou plusieurs des revendications 1 à 7, à une température entre 15°C et 40°C pendant une durée fixe selon l'espèce végétale du produit alimentaire et selon le type de lavage manuel ou automatique.
